# EUROPÄISCHE PATENTSCHRIFT

(11) **EP 2 712 413 B1**
(45) Veröffentlichungstag und Bekanntmachung des Hinweises auf die Patenterteilung: **28.12.2016**
(21) Anmeldenummer: 12742799.5
(22) Anmeldetag: 18.07.2012
(51) Int. Cl.: F16L 37/091

(54) **ANSCHLUSSVORRICHTUNG ZUM ANSCHLIESSEN EINER FLUIDLEITUNG**
CONNECTING DEVICE FOR CONNECTING A FLUID LINE
DISPOSITIF DE RACCORDEMENT PERMETTANT DE RACCORDER UNE CONDUITE DE FLUIDES

(30) Priorität: 08.08.2011 DE 102011109788
(43) Veröffentlichungstag der Anmeldung: 02.04.2014
(73) Patentinhaber: Festo AG & Co. KG, 73734 Esslingen (DE)
(72) Erfinder: GÖTZ, Florian, 73249 Wernau (DE); DECKER, Andreas, 73730 Esslingen (DE)
(74) Vertreter: Patentanwälte Magenbauer & Kollegen Partnerschaft mbB
(86) Internationale Anmeldenummer: PCT/EP2012/003016
(87) Internationale Veröffentlichungsnummer: WO 2013/020637

(56) Entgegenhaltungen:
- DE-A1- 10 162 658
- DE-B3-102005 017 692
- DE-C1- 10 212 844
- FR-A1- 2 876 774

## Beschreibung

Die Erfindung betrifft eine Anschlussvorrichtung zum Anschließen einer Fluidleitung, mit einer Halteeinrichtung, in die die anzuschließende Fluidleitung einsteckbar und durch die die eingesteckte Fluidleitung festhaltbar ist, und mit einer die Halteeinrichtung in einer Umfangsrichtung ringartig umschließenden und dabei fixierenden Gehäusemanschette, die aus mehreren in der Umfangsrichtung aneinandergereihten Manschettensegmenten besteht und koaxial von einem Befestigungsring umschlossen ist, der die von ihm umschlossenen Manschettensegmente zusammenhält.

Eine aus der DE 101 62 657 B4 bekannte Anschlussvorrichtung ermöglicht ein lösbares Anschließen einer insbesondere als Schlauch ausgebildeten Fluidleitung. Die angeschlossene Fluidleitung wird durch eine ringförmige Halteeinrichtung festgehalten, die in einer hülsenförmigen Gehäusemanschette fixiert ist. Zusammen mit der Gehäusemanschette kann die Halteeinrichtung zu einer Montagebaugruppe zusammengefügt werden, die sich durch Einpressen in einer Aufnahmevertiefung eines Aufnahmekörpers befestigen lässt. Der Aufnahmekörper ist beispielsweise das Gehäuse eines fluidtechnischen Gerätes. Die Gehäusemanschette besteht aus zwei ringförmigen Körpern, die nach vorherigem Einsetzen des Halteringes koaxial zusammengefügt werden. Der damit verbundene Herstellungs- und Montageaufwand ist relativ groß.

Aus der DE 10 2005 017 692 B3 ist eine Anschlussvorrichtung für eine Fluidleitung bekannt, die ein einstückiges, ring- oder hülsenförmiges Käfigelement aufweist, das über mehrere zur Fixierung einer eingesteckten Fluidleitung dienende Krallenelemente verfügt. Das Käfigelement kann mit einem Verankerungsring zu einer Montagebaugruppe zusammengefügt werden, die sich durch Einpressen in einer Aufnahmevertiefung eines Trägerbauteils fixieren lässt. Die Herstellung des Käfigelementes als metallisches Stanzbiegeteil ist technologisch sehr anspruchsvoll und daher relativ teuer.

Die DE 102 12 844 C1 beschreibt eine Anschlussvorrichtung nach dem Oberbegriff des Anspruches 1, die eine Hülse aufweist, die axial geteilt ist und die in ihrer Gesamtheit von einer Ringhülse umschlossen ist.

Der Erfindung liegt die Aufgabe zugrunde, eine Anschlussvörrichtung zu schaffen, die einfach und kostengünstig herstellbar und montierbar ist.

Diese Aufgabe wird dadurch gelöst, dass der Befestigungsring in seiner Gesamtheit als flache Ringscheibe ausgebildet ist, die mit einem zur Befestigung in einer Aufnahmevertiefung eines Aufnahmekörpers nutzbaren Verankerungsrand radial über die Gehäusemanschette vorsteht.

Der in ihrer Umfangsrichtung segmentierte Aufbau der Gehäusemanschette ermöglicht eine kostengünstige Herstellung unter Verzicht auf teure Drehteile. Die Manschettensegmente können kostengünstig als Gussteile und insbesondere als Spritzgussteile gefertigt werden. Eine bezüglich der Gehäusemanschette separat ausgebildete Halteeinrichtung kann vorteilhaft dadurch an der Gehäusemanschette fixiert werden, dass deren Manschettensegmente von außen her an die Halteeinrichtung angesetzt werden. Derart zu einer Baugruppe zusammengefasst, sind Gehäusemanschette und Halteeinrichtung sehr einfach einheitlich handhabbar. Insbesondere eröffnet sich die vorteilhafte Möglichkeit, eine die Gehäusemanschette und die Halteeinrichtung aufweisende Baugruppe im vormontierten Zustand als Einheit in einem Aufnahmekörper zu montieren, beispielsweise unmittelbar im Gehäuse eines fluidtechnischen Gerätes. Die Anschlussvorrichtung enthält einen Befestigungsring, der die Gehäusemanschette radial außen koaxial umschließt. Der Befestigungsring ist in seiner Umfangsrichtung vorzugsweise ununterbrochen, so dass er eine hohe Stabilität aufweist. Der Befestigungsring erfüllt die vorteilhafte Funktion, die um die Halteeinrichtung herum angeordneten Manschettensegmente zusammenzuhalten und dadurch die Gehäusemanschette zu stabilisieren. Dieser Zusammenbau von Gehäusemanschette und Befestigungsring geschieht zweckmäßigerweise vor der Montage in einer Aufnahmevertiefung eines Aufnahmekörpers. Mit anderen Worten können die Gehäusemanschette und der Befestigungsring zu einer einfach handhabbaren Baugruppe zusammengefügt werden. Der Befestigungsring ist scheibenähnlich flach gestaltet und hat die Form einer Ringscheibe mit einem relativ großen Innendurchmesser. Er ist als flache Ringscheibe ausgebildet, die mit einem zur Befestigung in einer Aufnahmevertiefung eines Aufnahmekörpers nutzbaren Verankerungsrand radial über die Gehäusemanschette vorsteht.

Vorteilhafte Weiterbildungen der Erfindung gehen aus den Unteransprüchen hervor.

Die Manschettensegmente sind zweckmäßigerweise kreisbogenförmig gestaltet. Sie können insbesondere sowohl an ihrem Innenumfang als auch an ihrem Außenumfang eine kreisbogenförmig gekrümmte Kontur haben. Auf diese Weise ist die durch das Zusammensetzen der Manschettensegmente erhaltene Gehäusemanschette insbesondere optimal vorbereitet, um eine einen kreisrunden Querschnitt aufweisende Fluidleitung aufzunehmen und um in einer einen kreisförmigen Querschnitt aufweisenden Aufnahmevertiefung eines Aufnahmekörpers montiert zu werden.

Die in der Umfangsrichtung der Gehäusemanschette gemessene Länge jedes Manschettensegments entspricht zweckmäßigerweise maximal einem Bogenwinkel von 180°. Auf diese Weise ist ein problemloses Ansetzen von radial außen her an eine ringförmige Halteeinrichtung gewährleistet.

Prinzipiell kann die Gehäusemanschette sich aus einer beliebigen Anzahl von in ihrer Umfangsrichtung aneinandergereihten Manschettensegmenten zusammensetzen. Als derzeit optimal unter den Gesichtspunkten der Herstellkosten und der Montage wird ein Manschettenaufbau aus genau zwei Manschettensegmenten angesehen, deren in der Umfangsrichtung gemessene Länge vorzugsweise identisch ist und die sich zweckmäßigerweise jeweils über einen Bogenwinkel von im Wesentlichen 180° erstrecken. Die beiden Manschettensegmente aneinandergesetzt bilden somit eine ringförmige Manschettenstruktur.

Es ist von Vorteil, wenn sich die Gehäusemanschette aus individuellen Manschettensegmenten zusammensetzt. Diese individuellen Manschettensegmente können je nach Ausgestaltung der Gehäusemanschette im aneinandergereihten Zustand ihre Individualität behalten oder aneinander fixiert sein. Eine vorteilhafte Bauform sieht vor, dass die Manschettensegmente auch nach dem Zusammensetzen der Gehäusemanschette nicht direkt aneinander befestigt sind. Der Zusammenhalt der Gehäusemanschette ergibt sich hierbei durch das Zusammenwirken der Manschettensegmente mit der von ihnen umschlossenen Halteeinrichtung und/oder aufgrund von bezüglich der Manschettensegmente separaten Befestigungsmitteln, die an allen Manschettensegmenten gleichzeitig angreifen. Befestigungsmittel dieser Art können beispielsweise mindestens einen die aneinandergereihten Manschettensegmente konzentrisch umschließenden Befestigungsring enthalten. Auch können Befestigungsmittel von einem Aufnahmekörper gebildet sein, in den die Gehäusemanschette derart eingesetzt ist, dass ihre Manschettensegmente von diesem Aufnahmekörper radial außen umschlossen werden.

Der Zusammenbau der Anschlussvorrichtung gestaltet sich besonders einfach, wenn die Manschettensegmente derart direkt miteinander verbunden sind, dass sie eine zusammenhängende Segmentkette bilden. Diese Segmentkette kann durchgängig geschlossen sein oder ist an wenigstens einer Stelle zwischen zwei in der Umfangsrichtung aufeinanderfolgenden Manschettensegmenten offen. In jedem Verbindungsbereich können die betroffenen Manschettensegmente entweder lösbar oder auch unlösbar miteinander verbunden sein. Als lösbare Verbindung kommt insbesondere eine Steckverbindung oder eine Rastverbindung in Frage. Eine Rastverbindung kann allerdings auch unlösbar ausgeführt sein. Weitere Möglichkeiten zur unlösbaren Verbindung bestehen in einem Verkleben oder Verschweißen der aneinander angrenzenden Manschettensegmente.

Jedes Manschettensegment verfügt über zwei in der Umfangsrichtung orientierte, jedoch einander entgegengesetzte Endabschnitte. Innerhalb der Gehäusemanschette liegen sich Endabschnitte von in der Umfangsrichtung aufeinanderfolgenden Manschettensegmenten in jeweils einem als Übergangsbereich bezeichenbaren Bereich paarweise gegenüber. Eine etwaige Verbindung zwischen aufeinanderfolgenden Manschettensegmenten befindet sich in einem solchen Übergangsbereich. Besteht die Gehäusemanschette aus nur zwei Manschettensegmenten, sind folglich zwei Übergangsbereiche vorhanden, in denen die Manschettensegmente lösbar oder unlösbar miteinander verbunden sein können.

Eine besonders vorteilhafte Ausgestaltung der Gehäusemanschette sieht vor, dass die Manschettensegmente bis auf einen Übergangsbereich in jedem weiteren Übergangsbereich mittels eines Scharniers gelenkig miteinander verbunden sind. Das mindestens eine Scharnier ist vorzugsweise als Filmscharnier konzipiert und besteht vorzugsweise aus mindestens einem dünnen, biegbaren Materialsteg, der die aneinander angrenzenden Manschettensegmente einstückig miteinander verbindet. Die Gelenkigkeit des Filmscharniers ergibt sich aus der Biegbarkeit des mindestens einen Materialsteges. Eine solche Bauform empfiehlt sich insbesondere bei einer Realisierung der Gehäusemanschette aus Kunststoffmaterial. Hier kann eine offene Segmentkette aus untereinander durch Scharniere verbundenen Manschettensegmenten kostengünstig durch Spritzgießen hergestellt werden. Anschließend können die gelenkig miteinander verbundenen Manschettensegmente derart relativ zueinander verschwenkt werden, dass sie sich zu der Gehäusemanschette ergänzen. Die Manschettensegmente können hierbei in vorteilhafter Weise außen um die zuvor bereitgestellte Halteeinrichtung herum platziert werden.

Besonders zweckmäßig ist es, eine Gehäusemanschette durch eine Segmentkette zu realisieren, die aus lediglich zwei bevorzugt kreisbogenförmig gekrümmten Manschettensegmenten besteht, die an einem ihrer beiden Endbereiche mittels eines Scharniers schwenkbeweglich aneinander angelenkt sind. In einem Ausgangszustand sind die Manschettensegmente auseinandergeklappt, so dass die Segmentkette eine längliche Gestalt aufweist. Ausgehend von dieser länglichen Gestalt lässt sich die Gehäusemanschette sehr einfach dadurch realisieren, dass die Manschettensegmente um das Scharnier herum verschwenkt und zusammengeklappt werden. Die Schwenkebene verläuft insbesondere rechtwinkelig zur Längsachse der zu bildenden Gehäusemanschette.

Die zum Festhalten einer eingesteckten Fluidleitung dienende Halteeinrichtung ist zweckmäßigerweise ring- oder hülsenförmig ausgebildet und wird von der Gehäusemanschette unter koaxialer Anordnung umschlossen. Vorzugsweise besteht die Halteeinrichtung aus einem Haltering, der zweckmäßigerweise insgesamt aus einem federelastischen Material besteht und der an seinem nach radial außen weisenden äußeren Rand dadurch an der Gehäusemanschette fixiert ist, dass er in eine am Innenumfang der Gehäusemanschette ausgebildete Verankerungsnut eingreift, die zweckmäßigerweise als Ringnut ausgebildet ist. Der Haltering verfügt zweckmäßigerweise über insbesondere schräg nach radial innen ragende, federelastisch biegbare Haltevorsprünge, die in der Lage sind, eine in den Haltering eingesteckte Fluidleitung am Außenumfang haltend zu beaufschlagen.

Damit sich die Fluidleitung bei Bedarf ohne Beschädigungsgefahr wieder aus der Anschlussvorrichtung herausziehen lässt, enthält die Anschlussvorrichtung zweckmäßigerweise ein ringartig ausgebildetes Löseelement, das von einer axialen Vorderseite her koaxial und axial verschieblich in die Gehäusemanschette eingreift. Es verfügt über ein im Innern der Gehäusemanschette liegendes Beaufschlagungsende, das axial vor dem Haltering zu liegen kommt. Durch manuelles Beaufschlagen des Löseelementes kann selbiges gegen den Haltering gedrückt werden, so dass dessen Haltevorsprünge unter Vergrößerung des von ihnen umschlossenen Querschnittes von einer eingesteckten Fluidleitung abgehoben werden.

Es ist möglich, das Löseelement so anzuordnen, dass die Manschettensegmente bei der Herstellung der Gehäusemanschette von radial außen her daran ansetzbar sind. Eine weitere Montagemöglichkeit besteht darin, das Löseelement nach dem vorherigen Herstellen der Gehäusemanschette axial in die Gehäusemanschette von der axialen Vorderseite her einzustecken.

Der Befestigungsring kann auf die Gehäusemanschette beispielsweise koaxial aufgesteckt und/oder aufgerastet werden.

Der Befestigungsring lässt sich in vorteilhafter Weise als Befestigungsmittel nutzen, das eine Einpressbefestigung der Gehäusemanschette in einer Aufnahmevertiefung eines Aufnahmekörpers ermöglicht. Hierzu verfügt der Befestigungsring über einen Außenumfang, der größer ist als derjenige der Gehäusemanschette, so dass er mit einem Befestigungsrand radial nach außen über die Gehäusemanschette hinausragt. Beim Einpressen einer aus Gehäusemanschette, Halteeinrichtung und Befestigungsring bestehenden Baugruppe in einen Aufnahmekörper kann der Befestigungsrand des Befestigungsringes in das Material des Aufnahmekörpers eindringen und eine feste Verankerung hervorrufen. Besonders vorteilhaft ist diese Befestigungsmaßnahme dann, wenn der Befestigungsring aus einem Metall und der Aufnahmekörper aus einem Kunststoffmaterial besteht.

In seiner äußeren Formgebung verfügt der Befestigungsring zweckmäßigerweise über zwei einander axial entgegengesetzte ringförmige Stirnflächen mit unterschiedlich großen Außendurchmessern und außerdem über eine sich vorzugsweise durchgängig zwischen diesen beiden Stirnflächen erstreckende konische Außenumfangsfläche. Der Übergangsbereich zwischen der konischen Außenumfangsfläche und der Stirnfläche größeren Außendurchmessers ist zweckmäßigerweise durch eine relativ scharfe Befestigungskante gekennzeichnet, die dazu prädestiniert ist, sich in das Material eines Aufnahmekörpers, in den der Befestigungsring eingesetzt wird, einzudrücken, um einen Formschluss herzustellen.

Der Befestigungsring wird zweckmäßigerweise mit seiner Stirnfläche kleineren Durchmessers voraus in eine Aufnahmevertiefung des Aufnahmekörpers hineingedrückt, so dass die konische Außenumfangsfläche ein leichtgängiges Einführen begünstigt. Wird der Befestigungsring nach dem Einpressen in die Aufnahmevertiefung entgegen der Montagerichtung belastet, wird die als Zahn wirkende Befestigungskante verstärkt in das Material des Aufnahmekörpers hineingedrückt, so dass eine sichere Verankerung hervorgerufen wird.

Die axialen Abmessungen des Befestigungsringes sind aufgrund seiner flachen Bauweise zweckmäßigerweise wesentlich kleiner als diejenigen der Gehäusemanschette.

Bevorzugt ist der Befestigungsring so gestaltet, dass er einen zentralen Ringabschnitt aufweist, an den sich radial außen ein Verankerungsrand anschließt. Der Befestigungsring verfügt dabei über zwei axiale, einander entgegengesetzt orientierte Stirnflächen, die jeweils bevorzugt in einer zur Längsachse des Befestigungsringes rechtwinkeligen Radialebene verlaufen. Diese Stirnflächen bilden zweckmäßigerweise zugleich die Stirnflächen des zentralen Ringabschnittes. Die maximalen axialen Abmessungen des Befestigungsringes sind zweckmäßigerweise vom Abstand dieser beiden Stirnflächen vorgegeben. Der Verankerungsrand ist insbesondere so gestaltet, dass er sich ausschließlich in einem Bereich erstreckt, der durch die beiden von den Stirnflächen des Ringabschnittes definierten Radialebenen begrenzt ist.

Die Anschlussvorrichtung enthält zweckmäßigerweise einen Aufnahmekörper, der über eine Aufnahmevertiefung zur zumindest teilweisen Aufnahme der Gehäusemanschette verfügt. Gemeinsam mit der Halteeinrichtung und einem vorzugsweise auch vorhandenen Befestigungsring ist die Gehäusemanschette als Bestandteil einer Montagebaugruppe ausgebildet, die insbesondere durch Einpressen in der Aufnahmevertiefung fixierbar oder fixiert ist.

Bei dem Aufnahmekörper kann es sich beispielsweise um die Wandung eines fluidtechnischen Gerätes handeln, beispielsweise eines Ventils oder eines fluidbetätigten Antriebes. Ein gesonderter Gehäusekörper zur Definition der Aufnahmevertiefung erübrigt sich dadurch. Alternativ kann als Aufnahmekörper jedoch auch ein gesonderter, individueller Gehäusekörper vorgesehen sein, der mit Anschlussmitteln, beispielsweise mit einem Anschlussgewinde, ausgestattet ist, die die Befestigung an einer dafür vorgesehenen Schnittstelle eines fluidtechnischen Gerätes oder Bauteils ermöglichen.

Die Anschlussvorrichtung enthält zweckmäßigerweise auch noch einen zu der Gehäusemanschette koaxialen Dichtungsring, der dazu vorgesehen ist, eine eingesteckte Fluidleitung am Außenumfang dichtend zu beaufschlagen. Ein solcher Dichtungsring ist zweckmäßigerweise an der Gehäusemanschette fixiert und lässt sich vor der Montage in einer Aufnahmevertiefung mit der Gehäusemanschette zu einer Baugruppe zusammenfassen. Vorzugsweise ist der Dichtungsring mittels einer Rastverbindungseinrichtung an der Gehäusemanschette fixiert. Der Dichtungsring kann die Gehäusemanschette radial außen ringförmig umgreifen, um auch eine Befestigungsfunktion zum Zusammenhalten der Manschettensegmente zu erfüllen. Der Dichtungsring kann beispielsweise in eine Nut am Außenumfang der Gehäusemanschette eingeknüpft werden.

Die Gehäusemanschette ist auch dazu geeignet, durch andere Befestigungsmaßnahmen außer einer Einpressbefestigung in einer Aufnahmevertiefung fixiert zu werden. Insbesondere wenn ein die Aufnahmevertiefung definierender Aufnahmekörper aus Metall besteht, ergibt sich die Möglichkeit, eine die Gehäusemanschette enthaltende Baugruppe in die Aufnahmevertiefung einzuschieben und anschließend durch einen Bördelungsvorgang des Aufnahmekörpers axial zu fixieren.

Nachfolgend wird die Erfindung anhand der beiliegenden Zeichnung näher erläutert. In dieser zeigen:
- Figur 1: in perspektivischer Darstellung eine bevorzugte Ausführungsform der erfindungsgemäßen Anschlussvorrichtung,
- Figur 2: die Anordnung aus Figur 1 im Längsschnitt,
- Figur 3: die Anordnung aus Figur 1 vor der Montage einer die Gehäusemanschette umfassenden Einsatzbaugruppe in einem Aufnahmekörper, wobei der Aufbau der Einsatzbaugruppe ergänzend in einer Explosionsdarstellung illustriert ist,
- Figur 4: einen Querschnitt der Anordnung aus Figur 2 gemäß Schnittlinie IV-IV aus Figur 2,
- Figur 5: einen bevorzugten Aufbau einer zur Bildung einer Gehäusemanschette vorgesehenen Segmentkette aus zwei aneinander angelenkten Manschettensegmenten in einer perspektivischen Darstellung,
- Figur 6: die Anordnung aus Figur 5 in einer axialen Ansicht mit Blickrichtung gemäß Pfeil V, wobei strichpunktiert angedeutet ist, wie die Manschettensegmente durch Verschwenken um das sie verbindende Scharnier zu der Gehäusemanschette zusammenklappbar sind, und
- Figur 7: eine Seitenansicht der Anordnung aus Figur 5 mit Blickrichtung gemäß Pfeil VII aus Figur 5.

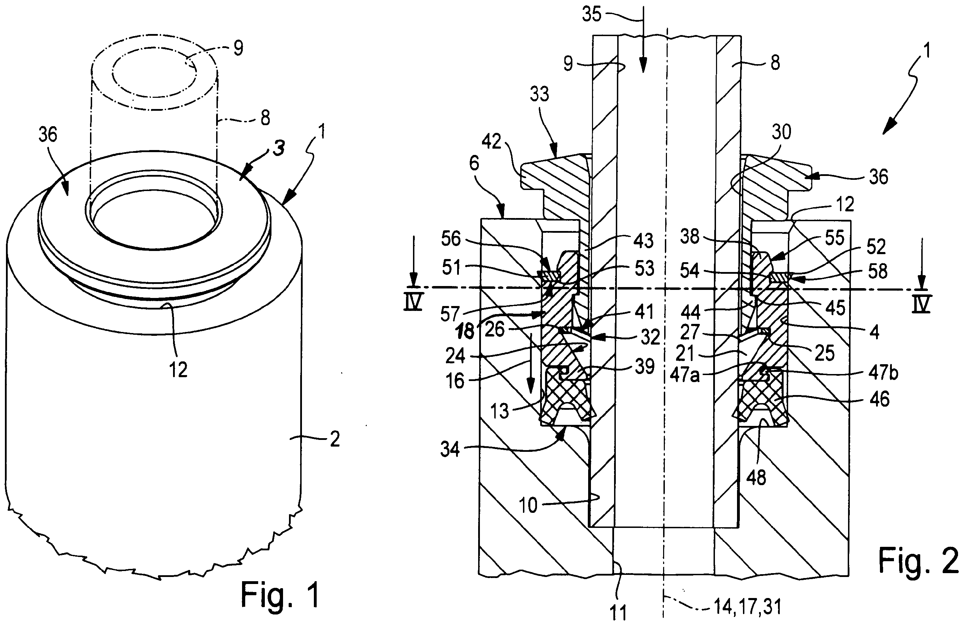

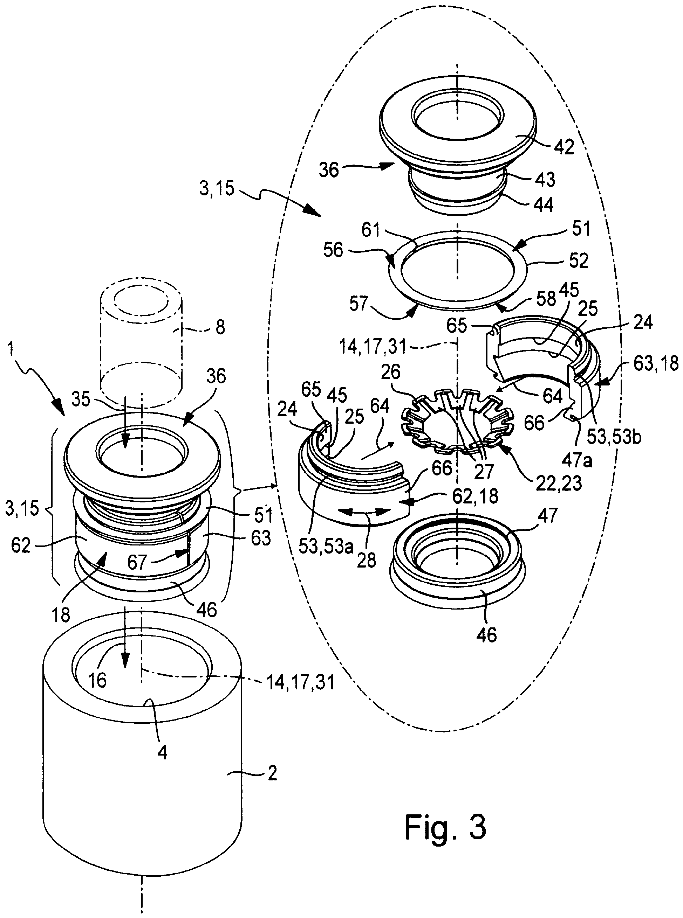

Die Figuren 1 bis 4 zeigen eine Anschlussvorrichtung 1 mit einem Aufnahmekörper 2 und einer Anschlusseinheit 3, die über einen Teil ihrer axialen Länge hinweg von dem Aufnahmekörper 2 aufgenommen oder aufnehmbar ist.

Der Aufnahmekörper 2 enthält eine Aufnahmevertiefung 4, die insbesondere kreiszylindrisch konturiert ist und die zu einer vorderen Stirnfläche 6 des Aufnahmekörpers 2 ausmündet. Die Anschlusseinheit 3 hat eine Längsachse 14 und ist koaxial in die Aufnahmevertiefung 4 einsteckbar oder eingesteckt. Mit Hilfe der Anschlusseinheit 3 lässt sich eine Fluidleitung 8 lösbar anschließen, um einen in ihr ausgebildeten Leitungskanal 9 mit einem sich in dem Aufnahmekörper 2 erstreckenden Fluidkanal 11 zu verbinden. Der Fluidkanal 11 schließt sich im Innern des Aufnahmekörpers 2 insbesondere koaxial an die Aufnahmevertiefung 4 an.

Das Ausführungsbeispiel zeigt einen Aufnahmekörper 2, der von einem nur partiell abgebildeten Gehäuse eines fluidtechnischen Gerätes gebildet ist, an das die Fluidleitung 8 angeschlossen werden soll. Bei dem fluidtechnischen Gerät handelt es sich beispielsweise um ein zur Steuerung von Fluidströmen dienendes Ventil oder um einen durch ein fluidisches Druckmedium betätigbaren Antrieb, zum Beispiel ein Linearantrieb oder ein Drehantrieb.

Zur Bildung der Anschlussvorrichtung 1 bedarf es mithin keines speziellen, individuellen Gehäuses, wenn ein Bestandteil eines fluidtechnischen Gerätes diese Funktion übernimmt. Gleichwohl besteht ohne weiteres die Möglichkeit, den Aufnahmekörper 2 als festen Bestandteil einer eigenständigen Anschlussvorrichtung 1 auszuführen. In diesem Fall handelt es sich bei dem Aufnahmekörper 2 zweckmäßigerweise um einen individuellen Gehäusekörper, der eine mit der Anschlusseinheit 3 bestückte Aufnahmevertiefung 4 aufweist und der außerdem über nicht weiter abgebildete Anschlussmittel verfügt, über die er an einer daran angepassten Schnittstelle einer fluidtechnischen Komponente befestigt werden kann. Die Anschlussmittel sind dabei beispielsweise als Einsteckstutzen oder als Gewindestutzen ausgebildet.

Die Aufnahmevertiefung 4 hat einen vorderen Endbereich, der über eine Montagemündung 12 zu der vorderen Stirnfläche 6 ausmündet. Darüber hinaus hat die Aufnahmevertiefung 4 einen axial tiefer in dem Aufnahmekörper 2 angeordneten hinteren Endabschnitt 13, auf den zweckmäßigerweise ein Leitungs-Zentrierabschnitt 10 kleineren Durchmessers folgt, an den sich der Fluidkanal 11 anschließt. Der Fluidkanal 11 hat zweckmäßigerweise einen kleineren Durchmesser als der hintere Endabschnitt 13 der Aufnahmevertiefung 4 und der Leitungs-Zentrierabschnitt 10.

Die Anschlusseinheit 3 ist zweckmäßigerweise eine sich aus mehreren aneinander fixierten Komponenten zusammensetzende Baugruppe, die im Folgenden als Montagebaugruppe 15 bezeichnet sei. Die Montagebaugruppe 15 kann vor dem Einsetzen in die Aufnahmevertiefung 4 zusammengefügt und dann als Einheit in einer Montagerichtung 16 im Rahmen eines Einsteckvorganges durch die Montagemündung 12 hindurch in die Aufnahmevertiefung 4 eingesetzt werden.

Die Montagerichtung 16 ist mit der Längsachse 17 der Aufnahmevertiefung 4 gleichgerichtet. Bei montierter Anschlusseinheit 3 fällt deren Längsachse 14 mit der Längsachse 17 der Aufnahmevertiefung 4 zusammen.

Die Anschlusseinheit 3 verfügt über ein ring- oder hülsenförmig gestaltetes Gehäuse, das als Gehäusemanschette 18 bezeichnet sei. Die Gehäusemanschette 18 umschließt einen sie axial durchsetzenden Manschetten-Innenraum 21. Die Gehäusemanschette 18 ist koaxial zu der Längsachse 14 ausgerichtet.

Die Gehäusemanschette 18 umschließt eine bevorzugt ring- oder hülsenförmig ausgebildete Halteeinrichtung 22. Exemplarisch ist die Halteeinrichtung 22 von einem insgesamt über federelastische Eigenschaften verfügenden Haltering 23 gebildet, der von der Gehäusemanschette 18 konzentrisch umschlossen wird. Vorzugsweise besteht der Haltering 23 aus einem Federstahl.

An ihrer den Manschetten-Innenraum 21 radial außen umschließenden und nach radial innen orientierten Innenumfangsfläche 24 ist die Gehäusemanschette 18 mit einer konzentrisch angeordneten und nach radial innen hin offenen Verankerungsnut 25 versehen. In diese Verankerungsnut 25 greift der Haltering 23 mit seinem radial außen angeordneten äußeren Rand 26 ein, so dass er an seinem äußeren Rand 26 bezüglich der Gehäusemanschette 18 axial unverschieblich fixiert ist.

Der Haltering 23 verfügt über mehrere in seiner Umfangsrichtung verteilt angeordnete und radial nach innen ragende Haltevorsprünge 27. Zweckmäßigerweise haben diese Haltevorsprünge 27 eine leichte Schrägstellung, wobei sie zu ihren dem äußeren Rand 26 entgegengesetzten freien Enden hin schräg nach radial innen und zugleich in der Montagerichtung 16 verlaufen. Die Haltevorsprünge 27 sind vorzugsweise krallenartig konfiguriert und relativ zu dem äußeren Rand 26 in der Einsetzrichtung 16 und in der Gegenrichtung federelastisch biegbar.

Der Haltering 23 verfügt zweckmäßigerweise in seiner Umfangsrichtung über eine Mäanderstruktur. Auf diese Weise ist auch sein äußerer Rand 26 unter Bildung einzelner in der Umfangsrichtung des Halteringes 23 mit Abstand aufeinanderfolgender Randabschnitte unterbrochen.

Die Gehäusemanschette 18 hat eine durch einen Doppelpfeil angedeutete Umfangsrichtung 28. Diese Umfangsrichtung 28 erstreckt sich um die Längsachse 31 der Gehäusemanschette 18 herum, wobei diese Längsachse 31 bei zusammengesetzter Montagebaugruppe 15 mit deren Längsachse 14 zusammenfällt. Die bevorzugt als Haltering 23 ausgebildete Halteeinrichtung 22 wird von der diesbezüglich als separate Struktur ausgebildeten Gehäusemanschette 18 in der Umfangsrichtung 28 ringartig umschlossen und zugleich derart axial unbeweglich festgehalten, dass die Haltevorsprünge 27 federelastisch verformbar und auslenkbar sind.

Im spannungsneutralen Zustand umschließen die Haltevorsprünge 27 mit ihren dem äußeren Rand 26 entgegengesetzten und im Folgenden als Haltekanten 32 bezeichneten freien Enden einen Ausgangsquerschnitt, dessen Fläche kleiner ist als der vom Außenumfang der anzuschließenden Fluidleitung 8 definierte äußere Leitungsquerschnitt.

Die Gehäusemanschette 18 hat eine an die Innenkontur der Aufnahmevertiefung 4 angepasste Außenkontur, die zweckmäßigerweise kreisförmig profiliert ist. Vorzugsweise ist der Außenumfang der Gehäusemanschette 18 wenigstens über einen gewissen Längenabschnitt hinweg kreiszylindrisch gestaltet. Bei montierter Anschlusseinheit 3 sitzt die Gehäusemanschette 18 vorzugsweise über ihre gesamte Länge hinweg im Innern der Aufnahmevertiefung 4, wobei zwischen ihrem Außenumfang und dem Innenumfang der Aufnahmevertiefung 4 zweckmäßigerweise ein geringfügiger radialer Spalt vorliegt.

Die Anschlusseinheit 3 hat eine axial orientierte Vorderseite 33 und eine diesbezüglich entgegengesetzt orientierte Rückseite 34. Im montierten Zustand ist die Rückseite 34 dem hinteren Endabschnitt 13 der Aufnahmevertiefung 4 zugeordnet und die Vorderseite 33 befindet sich im Bereich der Montagemündung 12. Vorzugsweise ragt die montierte Anschlusseinheit 3 mit ihrer Vorderseite 33 ein Stückweit aus der Aufnahmevertiefung 4 heraus und steht über die die Montagemündung 12 umrahmende vordere Stirnfläche 6 des Aufnahmekörpers 2 vor.

Bei derart montierter Anschlusseinheit 3 kann eine Fluidleitung 8 durch Steckmontage sehr leicht angeschlossen werden. Sie ist hierzu lediglich in einer mit der Montagerichtung 16 zusammenfallenden Einsteckrichtung 35 von der Vorderseite 33 her in die Anschlusseinheit 3 einzustecken, und zwar zumindest so weit, dass sie auch den koaxial in der Gehäusemanschette 18 fixierten Haltering 23 durchsetzt. Beim Hindurchtreten der Fluidleitung 8 durch den Haltering 23 werden dessen Haltevorsprünge 27 radial verformt, wobei der von ihnen umschlossene Querschnitt bis auf den äußeren Leitungsquerschnitt der Fluidleitung 8 vergrößert wird. Die sich hierbei aufbauenden federelastischen Rückstellkräfte bewirken, dass die Haltevorsprünge 27 mit ihren Haltekanten 32 an den Außenumfang der Fluidleitung 8 angedrückt werden und selbige festhalten. Durch die leichte Schrägstellung der Haltevorsprünge 27 wird überdies erreicht, dass sich die Haltekanten 32 verstärkt in die bevorzugt flexible Wandung der Fluidleitung 8 eindrücken, wenn die Fluidleitung 8 mit einer der Einsteckrichtung 35 entgegengesetzten Kraft beaufschlagt wird.

An dieser Stelle sei erwähnt, dass die anzuschließende Fluidleitung 8 vorzugsweise aus einem gummielastischen Material besteht und insbesondere als Schlauch ausgebildet ist. Gleichwohl kann es sich auch um eine aus einem starren Material bestehende Fluidleitung 8 handeln. Besteht eine Fluidleitung 8 beispielsweise aus Metall oder aus einem vergleichbar harten Material, kann sie am Außenumfang über eine Ringnut verfügen, in die die Haltekanten 32 einrasten können.

Die eingesteckte Fluidleitung 8 durchsetzt zweckmäßigerweise die Anschlusseinheit 3 und ragt mit ihrem Endabschnitt in den Leitungs-Zentrierabschnitt 10 hinein, von dessen Umfangswand sie radial abgestützt und zentriert wird.

Die Gehäusemanschette 18 hat einen im montierten Zustand der Montagemündung 12 zugeordneten vorderen Endabschnitt 38 und einen dem hinteren Endabschnitt 13 der Aufnahmevertiefung 4 zugewandten hinteren Endabschnitt 39.

Die Anschlusseinheit 3 enthält als weitere Komponente zweckmäßigerweise ein ringartig ausgebildetes und eine axiale Durchgangsöffnung 30 umschließendes Löseelement 36. Selbiges greift durch den vorderen Endabschnitt 38 hindurch koaxial in die Gehäusemanschette 18 hinein. Mit einem dem hinteren Endabschnitt 39 zugewandten Beaufschlagungsendabschnitt 37 endet es vor den dem vorderen Endabschnitt 38 zugewandten Rückenflächen 41 der Haltevorsprünge 27. Es ist relativ zum Aufnahmekörper 2 und insbesondere auch relativ zu der Gehäusemanschette 18 in und entgegen der Einsteckrichtung 35 verstellbar und insbesondere verschiebbar.

Eine in die Anschlusseinheit 3 eingesteckte Fluidleitung 8 durchsetzt die Durchgangsöffnung 30 des Löseelementes 36.

An einem Betätigungsabschnitt 42 des Löseelementes 36, der zweckmäßigerweise axial außerhalb des Aufnahmekörpers 2 liegt, wenn die Anschlusseinheit 3 in der Aufnahmevertiefung 4 montiert ist, kann eine in der Einsteckrichtung 35 orientierte Lösekraft manuell aufgebracht werden, so dass das Löseelement 36 axial in Richtung zum hinteren Endabschnitt 39 der Gehäusemanschette 18 geschoben wird und dabei die Rückenflächen 41 der Haltevorsprünge 27 beaufschlagt. Durch diese Beaufschlagung können die Haltevorsprünge 27 aktiv vom Außenumfang der eingesteckten Fluidleitung 8 abgehoben werden, um Letztere bei Bedarf ohne Beschädigung wieder herausziehen zu können. Mittels des Löseelementes 36 kann also der Haltering 23 zeitweilig so verformt werden, dass der von den Haltekanten 32 umschlossene Querschnitt größer ist als der äußere Leitungsquerschnitt der Fluidleitung 8.

Der Beaufschlagungsendabschnitt 37 ist zweckmäßigerweise Bestandteil eines hülsenförmigen und zweckmäßigerweise einfach oder mehrfach längsgeschlitzten Längenabschnittes 43 des Löseelements 36, an den sich an dem dem Beaufschlagungsendabschnitt 37 entgegengesetzten vorderen Endbereich der Betätigungsabschnitt 42 anschließt, welcher insbesondere die Form eines ringförmigen Radialvorsprunges hat.

Damit das Löseelement 36 ein verliersicher integrierter Bestandteil der Anschlusseinheit 3 und insbesondere auch der Montagebaugruppe 15 ist, verfügt es an seinem hülsenförmigen Längenabschnitt 43 über mindestens einen radial nach außen ragenden Sicherungsvorsprung 44, der eine an der Innenumfangsfläche 24 der Gehäusemanschette 18 ausgebildete und bevorzugt ringförmige Sicherungsstufe 45 hintergreift.

Im Bereich des Beaufschlagungsendabschnittes 37 ist das Löseelement 36 außen zweckmäßigerweise konisch gestaltet, mit sich zum freien axialen Ende des Beaufschlagungsendabschnittes 37 hin verjüngender Kontur. Der konisch gestaltete Abschnitt bildet zweckmäßigerweise zugleich den Sicherungsvorsprung 44. Durch die Konizität des Beaufschlagungsendabschnittes 37 kann das Löseelement 36 trotz der ringförmigen Struktur der Gehäusemanschette 18 mit leichtem Druck axial in die Gehäusemanschette 18 eingesetzt werden.

Die Anschlussvorrichtung 1 enthält einen Dichtungsring 46, der die Aufgabe hat, die eingesteckte Fluidleitung 8 bezüglich des Aufnahmekörpers 2 abzudichten und einen unerwünschten Fluidaustritt zu verhindern. Der Dichtungsring 46 ist koaxial zu der Gehäusemanschette 18 angeordnet und kann prinzipiell ein nicht in die Montagebaugruppe 15 integriertes, separates Bauteil sein. Beispielsweise kann der Dichtungsring 46 vor dem Einsetzen der Montagebaugruppe 15 in die Aufnahmevertiefung 4 eingesteckt werden.

Eine montagefreundlichere Variante der Anschlusseinheit 3 sieht vor, dass der Dichtungsring 46 einen Bestandteil der Montagebaugruppe 15 darstellt. Beim Ausführungsbeispiel ist dies der Fall.

Um ein Bestandteil der Montagebaugruppe 15 zu sein, ist der Dichtungsring 46 an der Gehäusemanschette 18 fixiert oder fixierbar. Besonders zweckmäßig ist es, wenn an der Gehäusemanschette 18 und an dem Dichtungsring 46 Schnappverbindungsstrukturen 47a, 47b vorhanden sind, die es ermöglichen, den Dichtungsring 46 im Rahmen einer Schnappverbindung in bevorzugt lösbarer Weise an der Gehäusemanschette 18 zu fixieren.

Der Dichtungsring 46 ist zweckmäßigerweise am hinteren Endabschnitt 39 der Gehäusemanschette 18 angeordnet. Er erstreckt sich mit wenigstens einem Teil seiner axialen Länge zwischen dem hinteren Endabschnitt 39 der Gehäusemanschette 18 und einer diesem hinteren Endabschnitt 39 mit axialem Abstand gegenüberliegenden ringförmigen Schulterfläche 48 des Aufnahmekörpers 2, die exemplarisch die Aufnahmevertiefung 4 rückseitig begrenzt.

An dem hinteren Endabschnitt 39 der Gehäusemanschette 18 ist exemplarisch als erste Schnappverbindungsstruktur 47a eine nach radial außen hin offene Befestigungsnut vorhanden, in die ein nach radial innen ragender, elastisch nachgiebiger Befestigungsvorsprung eingreifen kann, der eine am Dichtungsring 46 angeordnete zweite Schnappverbindungsstruktur 47b bildet.

Im derart montierten Zustand wird die Gehäusemanschette 18 an ihrem hinteren Endabschnitt 39 über einen Teil ihrer Länge hinweg radial außen von dem Dichtungsring 46 konzentrisch umschlossen.

Die Anschlusseinheit 3 enthält zweckmäßigerweise als weitere Komponente einen die Gehäusemanschette 18 radial außen koaxial umschließenden Befestigungsring 51. Der Befestigungsring 51 ist zweckmäßigerweise auch ein Bestandteil der Montagebaugruppe 15. Mit seiner Hilfe kann die gesamte Anschlusseinheit 3 sehr einfach durch bloßes Einpressen in die Aufnahmevertiefung 4 in dem Aufnahmekörper 2 verankert werden.

Im an der Gehäusemanschette 18 montierten Zustand ragt der Befestigungsring 51 mit einem den größten Außendurchmesser des Befestigungsringes 51 definierenden Verankerungsrand 52 radial über die Gehäusemanschette 18 hinaus. Der Verankerungsrand 52 steht also über den Außenumfang der Gehäusemanschette 18 zumindest geringfügig vor.

Der Befestigungsring 51 ist ein bezüglich der Gehäusemanschette 18 separates Bauteil und ist axial unbeweglich an der Gehäusemanschette 18 fixierbar oder fixiert. Im an der Gehäusemanschette 18 fixierten Zustand des Befestigungsringes 51 lässt sich mithin eine axial ortsfeste Fixierung der Gehäusemanschette 18 bezüglich des Aufnahmekörpers 2 allein dadurch realisieren, dass der Befestigungsring 51 an dem Aufnahmekörper 2 fixiert wird.

Der Befestigungsring 51 ist zweckmäßigerweise durch Verrastung an der Gehäusemanschette 18 festlegbar. Hierzu verfügt die Gehäusemanschette 18 im Bereich ihres Außenumfanges über eine radial nach außen offene und bezüglich der Längsachse 31 insbesondere konzentrisch angeordnete Befestigungsnut 53, in die der Befestigungsring 51 mit einem dem Verankerungsrand 52 radial entgegengesetzten Innenumfangsabschnitt 54 formschlüssig eingreift.

Die Befestigungsnut 53 befindet sich vorzugsweise am Außenumfang des vorderen Endabschnittes 38 der Gehäusemanschette 18. Dieser vordere Endabschnitt 38 kann axial im Anschluss an die Befestigungsnut 53 einen sich nach vorne hin konisch verjüngenden Montageabschnitt 55 aufweisen, der ein koaxiales Aufschieben des Befestigungsringes 51 zum Zwecke des Einrastens in die Befestigungsnut 53 begünstigt.

Der Befestigungsring 51 ist in seiner Umfangsrichtung, die mit der Umfangsrichtung 28 der Gehäusemanschette 18 zusammenfällt, vorzugsweise ununterbrochen. Auf diese Weise ergibt sich eine stabile Ringstruktur, die in der Lage ist, relativ große radiale Kräfte aufzubauen, welche angestrebt sind, um die Anschlusseinheit 3 sicher in der Aufnahmevertiefung 4 zu verankern.

Wenn die zu der Montagebaugruppe 15 zusammengesetzte Anschlusseinheit 3 in der Montagerichtung 16 in die Aufnahmevertiefung 4 eingepresst wird, gleitet der Befestigungsring 51, bevorzugt unter geringfügiger elastischer Verformung, mit seinem Verankerungsrand 52 an der Innenumfangsfläche der Aufnahmevertiefung 4 entlang. Eine gewisse Flexibilität für den Befestigungsring 51 ergibt sich hierbei insbesondere dadurch, dass das Verhältnis zwischen Außendurchmesser und Innendurchmesser des Befestigungsringes 51 relativ klein ist. Die radiale Breite des Ringkörpers des Befestigungsringes 51 ist also relativ gering, bei gleichzeitig relativ großem Innendurchmesser des Befestigungsringes 51.

Wenn die Montagebaugruppe 15 in die Aufnahmevertiefung 4 eingepresst ist, führt jegliche entgegengesetzt zur Montagerichtung 16 auf die Gehäusemanschette 18 einwirkende Kraft dazu, dass sich der Befestigungsring 51 mit seinem Verankerungsrand 52 in das Material des Aufnahmekörper 2 eingräbt und dadurch den Halt noch verstärkt.

Der Befestigungsring 51 hat eine axial orientierte vordere Stirnfläche 56 und eine diesbezüglich entgegengesetzt orientierte hintere Stirnfläche 57. Beide Stirnflächen 56, 57 haben den gleichen Innendurchmesser, so dass der Befestigungsring 51 eine bevorzugt kreiszylindrische Innenumfangsfläche 61 aufweist. Der Außendurchmesser der vorderen Stirnfläche 56 ist jedoch größer als derjenige der hinteren Stirnfläche 57, so dass der Befestigungsring 51 eine konische Außenumfangsfläche 58 aufweist, die sich von der Rückseite zur Vorderseite hin erweitert. Der Konuswinkel ist vorzugsweise kleiner als 90°.

Dementsprechend bildet der Übergangsbereich zwischen der konischen Außenumfangsfläche 57 und der vorderen Stirnfläche 56 den Verankerungsrand 52, der relativ scharfkantig ausfällt.

Wenn die Montagebaugruppe 15 in der Montagerichtung 16 in die Aufnahmevertiefung 4 eingesteckt wird, taucht der Befestigungsring 51 mit dem verjüngten Bereich der konischen Außenumfangsfläche 58 voraus in die Aufnahmevertiefung 4 ein, was einen sehr leichtgängigen Einschiebevorgang ermöglicht. Im montierten Zustand in der Gegenrichtung auftretende Kräfte haben dann zur Folge, dass sich der scharfkantige Verankerungsrand 52 wirksam in die Innenumfangsfläche der Aufnahmevertiefung 4 eingräbt.

Der Befestigungsring 51 ist insbesondere ringscheibenartig ausgebildet und verfügt zweckmäßigerweise über eine relativ geringe axiale Dicke. Vorzugsweise ist die axiale Dicke des Befestigungsringes 51 um einen Faktor, der zwischen 0,03 und 0,05 liegt und der zweckmäßigerweise etwa 0,04 beträgt, geringer als der Außendurchmesser des Befestigungsringes 51 im Bereich des Verankerungsrandes 52.

Während beim Ausführungsbeispiel der Dichtungsring 46 und das Löseelement 36 jeweils einen Bestandteil der vormontierten Montagebaugruppe 15 bilden, sind sie bei einem nicht dargestellten Ausführungsbeispiel als individuelle Komponenten ausgebildet, die unabhängig von den die Montagebaugruppe 15 bildenden Komponenten montiert werden. Beispielsweise kann der Dichtungsring 46 vor dem Einsetzen der Montagebaugruppe 15 als Einzelteil in die Aufnahmevertiefung 4 eingelegt werden. Hinsichtlich des Löseelements 36 besteht die Möglichkeit eines Einsetzens in die Gehäusemanschette 18, nachdem ebenfalls die die Gehäusemanschette 18 enthaltende Montagebaugruppe 15 zuvor in der Aufnahmevertiefung 4 montiert wurde.

Zur Montagebaugruppe 15 gehören zweckmäßigerweise zumindest die Halteeinrichtung 22 und die Gehäusemanschette 18. Ein weiterer bevorzugter Bestandteil der Montagebaugruppe 15 ist auch der Befestigungsring 51.

Bevorzugt ist der Befestigungsring 51 so gestaltet, dass er einen zentralen Ringabschnitt aufweist, an den sich radial außen der Verankerungsrand 52 anschließt. Seine beiden axialen Stirnflächen 56, 57 verlaufen jeweils bevorzugt in einer zur Längsachse des Befestigungsringes 51 rechtwinkeligen Radialebene. Diese Stirnflächen 56, 57 bilden bevorzugt zugleich die Stirnflächen des zentralen Ringabschnittes. Die maximalen axialen Abmessungen des Befestigungsringes 51 sind zweckmäßigerweise vom Abstand dieser beiden Stirnflächen 56, 57 vorgegeben, wobei der Verankerungsrand 52 insbesondere so gestaltet ist, dass er sich ausschließlich in einem Bereich erstreckt, der durch die beiden von den Stirnflächen 56, 57 des Ringabschnittes definierten Radialebenen begrenzt ist.

Der Befestigungsring 51 kann übrigens beispielsweise auch als Stanzbiegeteil nach dem Vorbild des in der DE 10 2005 017 692 B3 beschriebenen Verankerungsringes ausgeführt sein. In diesem Fall hat der Ringkörper des Befestigungsringes vorzugsweise einen abgewinkelten Querschnitt.

Ebenfalls in der Zeichnung nicht abgebildet ist eine Ausführungsform des Befestigungsringes 51, bei der sein Verankerungsrand 52 mehrfach unterbrochen ist und sich aus mehreren in der Umfangsrichtung mit Abstand aufeinanderfolgend angeordneten Verankerungsvorsprüngen zusammensetzt.

Die Anschlussvorrichtung 1 erweist sich als besonders herstellungs- und montagefreundlich, weil die Gehäusemanschette 18 nicht als einstückiger Ringkörper konzipiert ist, sondern sich aus mehreren in der Umfangsrichtung 28 aneinandergereihten Manschettensegmenten 62, 63 zusammensetzt. Diese mehreren Manschettensegmente 62, 63 können unter gleichzeitigem Einschluss der bevorzugt von einem Haltering 23 gebildeten Halteeinrichtung 22 aneinandergesetzt werden. Derart konzipierte Manschettensegmente 62, 63 können kostengünstig in optimaler Formgebung durch ein Gießverfahren und insbesondere durch Spritzgießen eines Kunststoffmaterials hergestellt werden. Denkbar wäre auch eine Druckgussherstellung aus einem kostengünstigen Metall, insbesondere Aluminium. Jedenfalls ist die Herstellung auf diese Weise wesentlich günstiger als bei Verwendung eines als Drehteil hergestellten Ringelementes.

Die Anzahl der zur Bildung der Gehäusemanschette 18 herangezogenen Manschettensegmente ist prinzipiell beliebig. Als derzeit bestmögliches Verhältnis zwischen Kosten und Nutzen hat es sich jedoch erwiesen, wenn die Gehäusemanschette 18 aus genau zwei Manschettensegmenten 62, 63 gebildet ist. Die Ausführungsbeispiele verfolgen ein derartiges zweiteiliges Konzept.

Wenn sich die Gehäusemanschette 18 aus lediglich zwei Manschettensegmenten 62, 63 zusammensetzt, entspricht deren in der Umfangsrichtung 28 gemessene Länge zweckmäßigerweise jeweils maximal einem Bogenwinkel von 180°. Auf diese Weise kann jedes Manschettensegment 62, 63 in einer durch Pfeile 64 angedeuteten Ansetzrichtung von radial außen her an den Außenumfang des Halteringes 23 angesetzt werden.

Jedes Manschettensegment 62, 63 ist vorzugsweise kreisbogenförmig gestaltet. Die Außenkontur entspricht hierbei im Wesentlichen der Innenkontur der Aufnahmevertiefung 4. Die Innenkontur ist zur Aufnahme des Halteringes 23 ausgebildet.

Unabhängig von der Anzahl der vorhandenen Manschettensegmente 62, 63 ist es von Vorteil, wenn die in der Umfangsrichtung 28 gemessene Länge aller Manschettensegmente untereinander identisch ist. So könnte die Gehäusemanschette 18 beispielsweise aus drei Manschettensegmenten aufgebaut sein, die sich jeweils über einen Bogenwinkel von 120° erstrecken.

Wenn die Gehäusemanschette 18 zur Fixierung eines Halteringes 23 eine Verankerungsnut 25 aufweist, enthält jedes Manschettensegment 62, 63 einen Umfangs-Längenabschnitt dieser Verankerungsnut 25. Im aneinandergesetzten Zustand der Manschettensegmente 62, 63 ergänzen sich die vorgenannten Umfangs-Längenabschnitte zu der gewünschten Verankerungsnut 25.

Entsprechendes gilt auch für gegebenenfalls vorhandene Schnappverbindungsstrukturen 47a, die zur Fixierung eines Dichtungsringes 46 genutzt werden.

Und schließlich weist jedes Manschettensegment 62, 63 einen Umfangs-Längenabschnitt 53a, 53b einer eventuell vorhandenen Befestigungsnut 53 auf, die sich zu der Befestigungsnut 53 ergänzen, wenn die Manschettensegmente 62, 63 zur Bildung der ringförmig strukturierten Gehäusemanschette 18 aneinandergereiht beziehungsweise aneinandergesetzt sind.

Um der Gehäusemanschette 18 schon vor dem Einbau in die Aufnahmevertiefung 4 einen stabilen Zusammenhalt zu verleihen, sind verschiedene Befestigungskonzepte denkbar. Bei dem in Figuren 1 bis 4 illustrierten Befestigungskonzept sind die Manschettensegmente 62, 63 nicht direkt aneinander fixiert. Sie erfahren ihren Zusammenhalt durch mindestens ein zusätzliches Befestigungsmittel, das zweckmäßigerweise einen Bestandteil der Montagebaugruppe 15 bildet. Dieses zusätzliche Befestigungsmittel ist insbesondere von dem schon erwähnten Befestigungsring 51 repräsentiert. Indem dieser Befestigungsring 51 koaxial auf die zu der Gehäusemanschette 18 aneinandergereihten Manschettensegmente 62, 63 aufgesetzt ist, hält er die Manschettensegmente 62, 63 unter Bildung einer Ringstruktur zusammen. Die beiden Manschettensegmente 62, 63 sind demnach gemeinsam mit dem Befestigungsring 51 Komponenten der vormontierbaren Montagebaugruppe 15.

Jedes Manschettensegment 62, 63 verfügt über einen in der Umfangsrichtung 28 orientierten ersten Endabschnitt 65 und einen ebenfalls in der Umfangsrichtung 28 orientierten, dem ersten Endabschnitt 65 entgegengesetzten zweiten Endabschnitt 66. Wenn mehrere Manschettensegmente 62, 63 zu der Gehäusemanschette 18 zusammengesetzt sind, schließt sich an jeden ersten Endabschnitt 65 des jeweils einen Manschettensegmentes 62 oder 63 ein zweiter Endabschnitt 66 des jeweils nächsten Manschettensegmentes 63, 62 an. Mithin liegen sich erste und zweite Endabschnitte 65, 66 der in der Umfangsrichtung 28 aufeinanderfolgenden Manschettensegmente 62, 63 jeweils paarweise gegenüber. Diese Bereiche des sich paarweisen Gegenüberliegens erster und zweiter Endabschnitte 65, 66 seien im Folgenden als Übergangsbereiche 67 bezeichnet.

Die Längserstreckung der Manschettensegmente 62, 63 in der Umfangsrichtung 28 kann so gewählt sein, dass sie insgesamt geringfügig kleiner ist als 360°, so dass sich die ersten und zweiten Endabschnitte 65, 66 an wenigstens einem und zweckmäßigerweise an jedem Übergangsbereich 67 mit einem geringen Abstand gegenüberliegen. Der aus diesem Abstand resultierende Zwischenraum 68 ergibt sich dadurch, dass durch den zwischen den Manschettensegmenten 62, 63 sitzenden Haltering 23 ein gewisser Mindestdurchmesser vorgegeben ist.

Auch der gemeinsam mit sämtlichen Manschettensegmenten 62, 63 in Eingriff stehende Dichtungsring 46 kann als Befestigungsmittel zum Zusammenhalten der individuellen Manschettensegmente 62, 63 genutzt werden. Wenn also beispielsweise eine Anschlusseinheit 3 keinen Befestigungsring 51 aufweist, weil die Anschlusseinheit 3 durch andere Maßnahmen in der Aufnahmevertiefung 4 fixiert wird, kann der Dichtungsring 46 allein den notwendigen Zusammenhalt der Manschettensegmente 62, 63 innerhalb der Montagebaugruppe 15 gewährleisten.

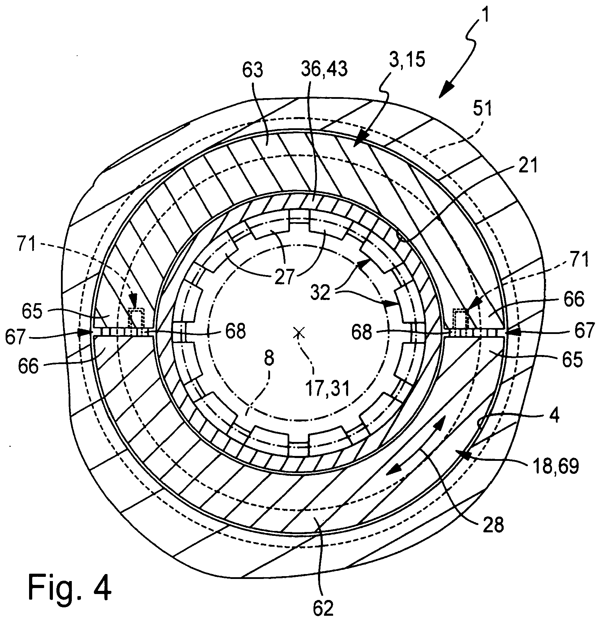

Die Gehäusemanschette 18 kann auch auf der Basis mehrerer Manschettensegmente 62, 63 realisiert werden, die unter Bildung einer zusammenhängenden Segmentkette 69 direkt miteinander verbunden oder verbindbar sind. In Figur 4 ist eine solche Art der Befestigung in einer Ausführungsform als Steckverbindung bei 71 gepunktet angedeutet. Hierbei ragt von mindestens einer der sich in jedem Übergangsbereich 67 gegenüberliegenden Stirnflächen der ersten und zweiten Endabschnitte 65, 66 ein Steckvorsprung 72 weg, der in eine Steckaufnahme 73 der gegenüberliegenden Stirnfläche eintaucht. Auf diese Weise ergibt sich eine gegenseitige Stabilisierung der aneinandergereihten Manschettensegmente 62, 63.

Die Steckverbindung 71 kann lösbar oder unlösbar ausgeführt sein. Beispielsweise können die Steckvorsprünge 72 und Steckaufnahmen 73 derart stark ineinandergepresst sein, dass die Manschettensegmente 62, 63 nicht mehr voneinander trennbar sind.Auch eine Rastverbindung wäre ohne weiteres möglich.

Es besteht ferner die Möglichkeit, die aneinandergereihten Manschettensegmente 62, 63 an ihren einander zugewandten Endabschnitten 65, 66 stoffschlüssig miteinander zu verbinden, beispielsweise durch Verkleben oder Verschweißen.

Eine stabile Ringstruktur der Gehäusemanschette 18 lässt sich mit direkter Befestigung zwischen den aneinandergereihten Manschettensegmenten 62, 63 im Übrigen auch dann noch realisieren, wenn an einem der Übergangsbereiche 67 keine gegenseitige Verbindung vorliegt und die Segmentkette 69 an dieser Stelle offen ist.

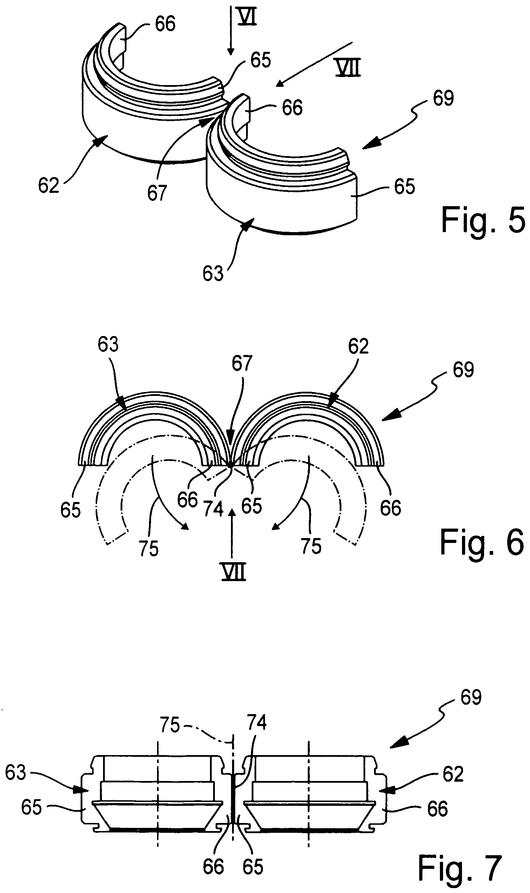

Die Figuren 5 bis 7 zeigen ein bevorzugtes Ausführungsbeispiel einer zur Bildung einer Gehäusemanschette 18 geeigneten Segmentkette 69. Die Segmentkette 69 enthält hier zwei Manschettensegmente 62, 63, deren Endabschnitte 65, 66 zwei sich bezüglich der Längsachse 31 diametral gegenüberliegende Übergangsbereiche 67 definieren, wie dies auch beim Ausführungsbeispiel der Figuren 1 bis 4 der Fall ist. Im Unterschied zu diesem Ausführungsbeispiel der Figuren 1 bis 4 sind die Manschettensegmente 62, 63 jedoch an einem der beiden Übergangsbereiche 67 durch ein Scharnier 74 gelenkig miteinander verbunden. Das Scharnier 74 definiert eine Gelenkachse 75, die parallel zur Längsachse 31 der zu bildenden Gehäusemanschette 18 verläuft.

An ihren anderen Endabschnitten 65, 66 sind die Manschettensegmente 62, 63 scharnierlos ausgebildet.

Es besteht nun die Möglichkeit, eine Segmentkette 69 aus durch jeweils ein Scharnier 74 aneinander angelenkten Manschettensegmenten 62, 63 herzustellen und die Gehäusemanschette 18 dadurch zu realisieren, dass die aneinander angelenkten Manschettensegmente 62, 63 gemäß Pfeilen 75 durch Verschwenken um die jeweilige Gelenkachse 75 so zusammengeklappt werden, dass sich auch die scharnierlosen Endabschnitte 65, 66 gegenüberliegen.

In dem scharnierlosen Übergangsbereich 67 kann die Segmentkette 69 auch nach Ausbildung der Gehäusemanschette 18 entweder offen sein oder durch Befestigungsmaßnahmen der oben bereits geschilderten Art lösbar oder unlösbar geschlossen werden.

Wenn die Gehäusemanschette 18 aus nur zwei Manschettensegmenten 62, 63 besteht, sind selbige über lediglich ein einziges Scharnier 74 aneinander angelenkt.

Es ist von Vorteil, wenn sämtliche Manschettensegmente 62, 63 über die Scharniere 74 einstückig miteinander verbunden sind. Das mindestens eine Scharnier 74 ist in diesem Fall insbesondere als sogenanntes Filmscharnier realisiert. Das Scharnier 74 besteht hierbei aus einem flexiblen Materialsteg, der an beiden durch das Scharnier 74 zu verbindenden Manschettensegmenten 62, 63 einstückig angeformt ist. Die Manschettensegmente 62, 63 selbst haben eine Wandstärke, die größer ist als diejenige des Filmscharniers.

Segmentketten 69, die aus Manschettensegmenten 62, 63 bestehen, welche mittels in Form von Filmscharnieren realisierten Scharnieren 74 einstückig miteinander verbunden sind, lassen sich besonders kostengünstig aus Kunststoffmaterial durch Spritzgießen herstellen.

## Patentansprüche

1. Anschlussvorrichtung zum Anschließen einer Fluidleitung, mit einer Halteeinrichtung (22), in die die anzuschließende Fluidleitung (8) einsteckbar und durch die die eingesteckte Fluidleitung (8) festhaltbar ist, und mit einer die Halteeinrichtung (22) in einer Umfangsrichtung (28) ringartig umschließenden und dabei fixierenden Gehäusemanschette (18), die aus mehreren in der Umfangsrichtung (28) aneinandergereihten Manschettensegmenten (62, 63) besteht und koaxial von einem Befestigungsring (51) umschlossen ist, der die von ihm umschlossenen Manschettensegmente (62, 63) zusammenhält, **dadurch gekennzeichnet, dass** der Befestigungsring (51) in seiner Gesamtheit als flache Ringscheibe ausgebildet ist, die mit einem zur Befestigung in einer Aufnahmevertiefung (4) eines Aufnahmekörpers (2) nutzbaren Verankerungsrand (52) radial über die Gehäusemanschette (18) vorsteht.

2. Anschlussvorrichtung nach Anspruch 1, **dadurch gekennzeichnet, dass** die Manschettensegmente (62, 63) kreisbogenförmig gestaltet sind.

3. Anschlussvorrichtung nach Anspruch 1 oder 2, **dadurch gekennzeichnet, dass** die in der Umfangsrichtung (28) gemessene Länge jedes Manschettensegments (62, 63) maximal einem Bogenwinkel von 180° entspricht.

4. Anschlussvorrichtung nach einem der Ansprüche 1 bis 3, **dadurch gekennzeichnet, dass** die Gehäusemanschette (18) aus lediglich zwei Manschettensegmenten (62, 63) besteht, deren in der Umfangsrichtung (28) gemessene Länge zweckmäßigerweise identisch ist.

5. Anschlussvorrichtung nach einem der Ansprüche 1 bis 4, **dadurch gekennzeichnet, dass** die Manschettensegmente (62, 63) nicht direkt aneinander fixiert sind.

6. Anschlussvorrichtung nach einem der Ansprüche 1 bis 4, **dadurch gekennzeichnet, dass** die Manschettensegmente (62, 63) unter Bildung einer zusammenhängenden Segmentkette (69) direkt miteinander verbunden sind.

7. Anschlussvorrichtung nach Anspruch 6, **dadurch gekennzeichnet, dass** die Segmentkette (69) an wenigstens einer Stelle zwischen zwei in der Umfangsrichtung (28) aufeinanderfolgenden Manschettensegmenten (62, 63) offen ist.

8. Anschlussvorrichtung nach Anspruch 6 oder 7, **dadurch gekennzeichnet, dass** die Manschettensegmente (62, 63) in mindestens einem und zweckmäßigerweise in jedem Verbindungsbereich lösbar oder unlösbar aneinander befestigt sind.

9. Anschlussvorrichtung nach einem der Ansprüche 6 bis 8, **dadurch gekennzeichnet, dass** jedes Manschettensegment (62, 63) zwei einander entgegengesetzte Endabschnitte (65, 66) aufweist und jeder Endabschnitt (65, 66) jedes Manschettensegments (62, 63) in einem Übergangsbereich (67) einem Endabschnitt (66, 65) eines anderen Manschettensegments (63, 62) gegenüberliegt, wobei die Manschettensegmente (62, 63) abgesehen von einem Übergangsbereich (67) in jedem weiteren Übergangsbereich (67) durch ein insbesondere als Filmscharnier ausgebildetes Scharnier (74) gelenkig miteinander verbunden sind.

10. Anschlussvorrichtung nach einem der Ansprüche 1 bis 9, **dadurch gekennzeichnet, dass** die Halteeinrichtung (22) ring- oder hülsenförmig ausgebildet und von der Gehäusemanschette (18) unter koaxialer Anordnung umschlossen ist.

11. Anschlussvorrichtung nach einem der Ansprüche 1 bis 10, **dadurch gekennzeichnet, dass** die Halteeinrichtung (22) einen koaxial von der Gehäusemanschette (18) umschlossenen Haltering (23) aufweist, der mit seinem äußeren Rand (26) in eine Verankerungsnut (25) der Gehäusemanschette (18) eingreift und dadurch an der Gehäusemanschette (18) fixiert ist, wobei der Haltering (23) zweckmäßigerweise über nach radial innen ragende, federelastisch biegbare Haltevorsprünge (27) verfügt, die vorgesehen sind, um die eingesteckte Fluidleitung (8) an ihrem Außenumfang haltend zu beaufschlagen.

12. Anschlussvorrichtung nach Anspruch 11, **dadurch gekennzeichnet, dass** sie ein ringartig ausgebildetes Löseelement (36) aufweist, das von einer axialen Vorderseite her koaxial und axial verschieblich in die Gehäusemanschette (18) eingreift und dadurch durch axiales Verschieben auf den Haltering (23) einwirken kann, um den von den Haltevorsprüngen (27) umschlossenen Querschnitt zum Zwecke einer Freigabe einer eingesteckten Fluidleitung (8) zu vergrößern.

13. Anschlussvorrichtung nach einem der Ansprüche 1 bis 12, **dadurch gekennzeichnet, dass** der Befestigungsring (51) verrastend an den Manschettensegmenten (62, 63) der Gehäusemanschette (18) fixiert ist.

14. Anschlussvorrichtung nach einem der Ansprüche 1 bis 13, **dadurch gekennzeichnet, dass** der Befestigungsring (51) zur Einpressbefestigung in der Aufnahmevertiefung (4) ausgebildet ist.

15. Anschlussvorrichtung nach einem der Ansprüche 1 bis 14, **dadurch gekennzeichnet, dass** der Befestigungsring (51) zwei einander axial entgegengesetzte ringförmige Stirnflächen (56, 57) mit übereinstimmenden Innendurchmessern und voneinander abweichenden Außendurchmessern aufweist und außerdem über eine sich zwischen diesen beiden Stirnflächen (56, 57) erstreckende konische Außenumfangsfläche (58) verfügt, die im Übergangsbereich zu der Stirnfläche (56) größeren Außendurchmessers einen als Kante ausgebildeten Verankerungsrand (52) bildet.

16. Anschlussvorrichtung nach einem der Ansprüche 1 bis 15, **dadurch gekennzeichnet, dass** der Befestigungsring (51) einen zentralen Ringabschnitt aufweist, an den sich radial außen ein zur Befestigung in einer Aufnahmevertiefung (4) eines Aufnahmekörpers (2) nutzbarer Verankerungsrand (52) anschließt und der zwei einander entgegengesetzte, axiale Stirnflächen (56, 57) aufweist, die sich jeweils in einer zur Längsachse des Befestigungsringes (51) rechtwinkeligen Radialebene erstrecken und die zugleich die Stirnflächen des zentralen Ringabschnittes bilden, wobei die maximalen axialen Abmessungen des Befestigungsringes (51) vom Abstand der beiden Stirnflächen (56, 57) bestimmt sind und der Verankerungsrand (52) sich ausschließlich in einem Bereich erstreckt, der durch die beiden von den Stirnflächen (56, 57) des Ringabschnittes definierten Radialebenen begrenzt ist.

17. Anschlussvorrichtung nach einem der Ansprüche 1 bis 16, **dadurch gekennzeichnet, dass** sie einen insbesondere aus Kunststoffmaterial bestehenden Aufnahmekörper (2) aufweist, der über eine Aufnahmevertiefung (4) zur zumindest teilweisen Aufnahme der Gehäusemanschette (18) verfügt, wobei die Anschlussvorrichtung zweckmäßigerweise eine zumindest die Gehäusemanschette (18) und die Halteeinrichtung (22) enthaltende Montagebaugruppe (15) aufweist, die, insbesondere durch Einpressen, in der Aufnahmevertiefung (4) fixierbar oder fixiert ist.

18. Anschlussvorrichtung nach einem der Ansprüche 1 bis 17, **dadurch gekennzeichnet, dass** sie einen koaxial zu der Gehäusemanschette (18) angeordneten und mit der Gehäusemanschette (18) zweckmäßigerweise zu einer Baugruppe zusammengefassten Dichtungsring (46) enthält.

## Claims

1. Connection device for the connection of a fluid line, with a holding fixture (22) into which the fluid line (8) to be connected may be inserted and by means of which the inserted fluid line (8) may be held fast, and with a housing sleeve (18), encompassing the holding fixture (22) like a ring in a circumferential direction (28) and thereby fixing it, which is comprised of several sleeve segments (62, 63) strung together in the circumferential direction (28) and is encompassed coaxially by a fastening ring (51), which holds together the sleeve segments (62, 63) encompassed by it, **characterised in that** the fastening ring (51) in its totality is in the form of a flat annular disc which extends radially beyond the housing sleeve (18) with an anchoring edge (52) which may be used for fixing in a mounting recess (4) of a mounting body (2).

2. Connection device according to claim 1, **characterised in that** the sleeve segments (62, 63) are circular-arc-shaped.

3. Connection device according to claim 1 or 2, **characterised in that** the length of each sleeve segment (62, 63) measured in the circumferential direction (28) corresponds to a maximum curve angle of 180°.

4. Connection device according to any of claims 1 to 3, **characterised in that** the housing sleeve (18) consists of only two sleeve segments (62, 63), the length of which measured in the circumferential direction (28) is expediently identical.

5. Connection device according to any of claims 1 to 4, **characterised in that** the sleeve segments (62, 63) are not directly fixed to one another.

6. Connection device according to any of claims 1 to 4, **characterised in that** the sleeve segments (62, 63) are connected directly to one another to form a continuous segment chain (69).

7. Connection device according to claim 6, **characterised in that** the segment chain (69) is open at one or more points between two consecutive sleeve segments (62, 63) in the circumferential direction (28).

8. Connection device according to claim 6 or 7, **characterised in that** the sleeve segments (62, 63) are fastened to one another, releasably or permanently, in at least one and expediently in each connection area.

9. Connection device according to any of claims 6 to 8, **characterised in that** each sleeve segment (62, 63) has two end sections (65, 66) opposite one another and, in a transition zone (67), each end section (65, 66) of each sleeve segment (62, 63) lies opposite an end section (66, 65) of another sleeve segment (63, 62), wherein the sleeve segments (62, 63), apart from one transition zone (67), are hinged to one another in each other transition zone (67) by a hinge (74), in particular in the form of a film hinge.

10. Connection device according to any of claims 1 to 9, **characterised in that** the holding fixture (22) is annular or sleeve-shaped and is encompassed by the housing sleeve (18) in a coaxial arrangement.

11. Connection device according to any of claims 1 to 10, **characterised in that** the holding fixture (22) has a retaining ring (23), coaxially encompassed by the housing sleeve (18) and engaging with its outer edge (26) in an anchorage slot (25) of the housing sleeve (18) and in this way fixed to the housing sleeve (18), wherein the retaining ring (23) expediently has radially inwards projecting, spring-elastic, flexible retaining projections (27), which are provided to have a holding action on the inserted fluid line (8) on its outer periphery.

12. Connection device according to claim 11, **characterised in that** it has a ring-like release element (36) which engages in the housing sleeve (18), coaxially and axially sliding from an axial front side and able to act on the retaining ring (23) through axial movement in order to increase the cross-section encompassed by the retaining projections (27) for the purpose of releasing an inserted fluid line (8)..

13. Connection device according to any of claims 1 to 12, **characterised in that** the fastening ring (51) is fixed by latching to the sleeve segments (62, 63) of the housing sleeve (18).

14. Connection device according to any of claims 1 to 13, **characterised in that** the fastening ring (51) is designed for fastening by pressing in to the mounting recess (4).

15. Connection device according to any of claims 1 to 14, **characterised in that** the fastening ring (51) has two annular end faces (56, 57), axially opposite one another, with congruent inside diameters, and outside diameters divergent from one another, and moreover has a conical outer peripheral face (58) extending between these two end faces (56, 57) and forming an anchoring edge (52) in the form of an edge in the transition zone to the end face (56) of greater outside diameter.

16. Connection device according to any of claims 1 to 15, **characterised in that** the fastening ring (51) has a central ring section which is adjoined radially outwards by an anchoring edge (52) which may be used for fastening in a mounting recess (4) of a mounting body (2) and has two axial end faces (56, 57), opposite one another, each extending in a radial plane at right-angles to the longitudinal axis of the fastening ring (51) and at the same time forming the end faces of the central ring section, wherein the maximum axial dimensions of the fastening ring (51) are determined by the distance between the end faces (56, 57), and the anchoring edge (52) extends only in an area which is bounded by the two radial planes defined by the end faces (56, 57) of the ring section.

17. Connection device according to any of claims 1 to 16 **characterised in that** it has a mounting body (2) made in particular of plastic material which has a mounting recess (4) for at least partial accommodation of the housing sleeve (18), wherein the connection device expediently has an assembly module (15) containing at least the housing sleeve (18) and the holding fixture (22), which is or may be fixed in the mounting recess (4), in particular by pressing in.

18. Connection device according to any of claims 1 to 17, **characterised in that** it contains a seal ring (46), arranged coaxially to the housing sleeve (18) and expediently combined with the housing sleeve (18) to form a module.

## Revendications

1. Dispositif de raccordement servant à raccorder un conduit de fluide, comprenant un système de maintien (22), dans lequel le conduit de fluide (8) à raccorder peut être enfiché et par lequel le conduit de fluide (8) enfiché peut être immobilisé, et comprenant une manchette de boîtier (18) entourant à la manière d'un anneau le système de maintien (22) dans une direction périphérique (28) et le fixant ainsi, laquelle est constituée de plusieurs segments de manchette (62, 63) alignés dans la direction périphérique (28) et est entourée de manière coaxiale par un anneau de fixation (51), qui tient unis les segments de manchette (62, 63) qu'elle entoure, **caractérisé en ce que** l'anneau de fixation (51) est réalisé dans son ensemble sous la forme d'un disque annulaire plat, qui fait saillie de manière radiale au-delà de la manchette de boîtier (18) par un bord d'ancrage (52) pouvant être utilisé aux fins de la fixation dans un renfoncement de logement (4) d'un corps de logement (2).

2. Dispositif de raccordement selon la revendication 1, **caractérisé en ce que** les segments de manchette (62, 63) sont configurés de manière à présenter une forme d'arc de cercle.

3. Dispositif de raccordement selon la revendication 1 ou 2, **caractérisé en ce que** la longueur, mesurée dans la direction périphérique (28), de chaque segment de manchette (62, 63) correspond au maximum à un angle cintré de 180°.

4. Dispositif de raccordement selon l'une quelconque des revendications 1 à 3, **caractérisé en ce que** la manchette de boîtier (18) est constituée de seulement deux segments de manchette (62, 63), dont la longueur mesurée dans la direction périphérique (28) est identique de manière appropriée.

5. Dispositif de raccordement selon l'une quelconque des revendications 1 à 4, **caractérisé en ce que** les segments de manchette (62, 63) ne sont pas fixés directement l'un contre l'autre.

6. Dispositif de raccordement selon l'une quelconque des revendications 1 à 4, **caractérisé en ce que** les segments de manchette (62, 63) sont reliés directement l'un à l'autre en formant une chaîne de segments (69) continue.

7. Dispositif de raccordement selon la revendication 6, **caractérisé en ce que** la chaîne de segments (69) est ouverte au niveau au moins d'un emplacement entre deux segments de manchette (62, 63) se suivant dans la direction périphérique (28).

8. Dispositif de raccordement selon la revendication 6 ou 7, **caractérisé en ce que** les segments de manchette (62, 63) sont fixés l'un contre l'autre de manière amovible et de manière inamovible dans au moins une zone de liaison et de manière appropriée dans chaque zone de liaison.

9. Dispositif de raccordement selon l'une quelconque des revendications 6 à 8, **caractérisé en ce que** chaque segment de manchette (62, 63) présente deux sections d'extrémité (65, 66) opposées l'une à l'autre, et **en ce que** chaque section d'extrémité (65, 66) de chaque segment de manchette (62, 63) fait face dans une zone de transition (67) à une section d'extrémité (66, 65) d'un autre segment de manchette (63, 62), dans lequel les segments de manchette (62, 63) sont reliés l'un à l'autre de manière articulée par une charnière (74) réalisée sous la forme d'une charnière pelliculaire à l'exception d'une zone de transition (67) dans chaque autre zone de transition (67).

10. Dispositif de raccordement selon l'une quelconque des revendications 1 à 9, **caractérisé en ce que** le système de maintien (22) est réalisé de manière à présenter une forme d'anneau ou une forme de douille et est entouré par la manchette de boîtier (18) selon une disposition coaxiale.

11. Dispositif de raccordement selon l'une quelconque des revendications 1 à 10, **caractérisé en ce que** le système de maintien (22) présente un anneau de maintien (23) entouré de manière coaxiale par la manchette de boîtier (18), lequel vient en prise par son bord (26) extérieur avec une rainure d'ancrage (25) de la manchette de boîtier (18) et est fixé ainsi au niveau de la manchette de boîtier (18), dans lequel l'anneau de maintien (23) dispose de manière appropriée de parties faisant saillie de maintien (27) dépassant radialement vers l'intérieur, pouvant être cintrées de manière élastique, lesquelles sont prévues pour soumettre à un maintien le conduit de fluide (8) enfiché au niveau de sa périphérie extérieure.

12. Dispositif de raccordement selon la revendication 11, **caractérisé en ce qu'**il présente un élément de desserrage (36) réalisé à la manière d'un anneau, qui vient en prise depuis un côté avant axial de manière mobile coaxialement et axialement avec la manchette de boîtier (18) et qui peut agir ce faisant par un coulissement axial sur l'anneau de maintien (23) afin d'agrandir la section transversale entourée des parties faisant saillie de maintien (27) aux fins de libérer un conduit de fluide (8) enfiché.

13. Dispositif de raccordement selon l'une quelconque des revendications 1 à 12, **caractérisé en ce que** l'anneau de fixation (51) est fixé par enclenchement au niveau des segments de manchette (62, 63) de la manchette de boîtier (18).

14. Dispositif de raccordement selon l'une quelconque des revendications 1 à 13, **caractérisé en ce que** l'anneau de fixation (51) est réalisé aux fins d'une fixation par enfoncement dans le renfoncement de logement (4).

15. Dispositif de raccordement selon l'une quelconque des revendications 1 à 14, **caractérisé en ce que** l'anneau de fixation (51) présente deux surfaces frontales (56, 57) en forme d'anneau opposées axialement l'une à l'autre présentant des diamètres intérieurs coïncidant et des diamètres extérieurs divergeant les uns des autres et dispose en outre d'une surface périphérique extérieure (58) conique s'étendant entre lesdites deux surfaces frontales (56, 57), laquelle forme dans la zone de transition menant à la surface frontale (56) à diamètre extérieur de plus grande taille un bord d'ancrage (52) réalisé sous la forme d'arête.

16. Dispositif de raccordement selon l'une quelconque des revendications 1 à 15, **caractérisé en ce que** l'anneau de fixation (51) présente une section annulaire centrale, à laquelle se raccorde, à l'extérieur radialement, un bord d'ancrage (52) pouvant être utilisé aux fins de la fixation dans un renfoncement de logement (4) d'un corps de logement (2) et qui présente deux surfaces frontales (56, 57) axiales opposées l'une à l'autre, qui s'étendent respectivement dans un plan radial à angles droits par rapport à l'axe longitudinal de l'anneau de fixation (51) et qui forment dans le même temps les surfaces frontales de la section annulaire centrale, dans lequel les dimensions axiales maximales de l'anneau de fixation (51) sont déterminées par la distance des deux surfaces frontales (56, 57) et le bord d'ancrage (52) s'étend exclusivement dans une zone, qui est délimitée par les deux plans radiaux définis par les surfaces frontales (56, 57) de la section annulaire.

17. Dispositif de raccordement selon l'une quelconque des revendications 1 à 16, **caractérisé en ce qu'**il présente un corps de logement (2) constitué en particulier d'un matériau plastique, lequel dispose d'un renfoncement de logement (4) servant au logement au moins partiel de la manchette de boîtier (18), dans lequel le dispositif de raccordement présente de manière appropriée un ensemble modulaire de montage (15) contenant au moins la manchette de boîtier (18) et le système de maintien (22), lequel peut être fixé ou est fixé, en particulier par enfoncement, dans le renfoncement de logement (4).

18. Dispositif de raccordement selon l'une quelconque des revendications 1 à 17, **caractérisé en ce qu'**il comporte un anneau d'étanchéité (46) disposé de manière coaxiale par rapport à la manchette de boîtier (18) et assemblé à la manchette de boîtier (18) de manière appropriée en un ensemble modulaire.
